# EUROPÄISCHE PATENTSCHRIFT

(11) **EP 2 758 755 B1**
(45) Veröffentlichungstag und Bekanntmachung des Hinweises auf die Patenterteilung: **23.10.2019**
(21) Anmeldenummer: 12751022.0
(22) Anmeldetag: 03.08.2012
(51) Int. Cl.: G01F 25/00, G01F 1/68, G01F 1/696, G01F 1/692

(54) **VERFAHREN ZUR ERFASSUNG EINER STRÖMUNGSEIGENSCHAFT EINES STRÖMENDEN FLUIDEN MEDIUMS**
METHOD FOR CAPTURING A FLOW PROPERTY OF A FLOWING FLUID MEDIUM
PROCÉDÉ SERVANT À APPRÉHENDER UNE PROPRIÉTÉ D'ÉCOULEMENT D'UN MILIEU FLUIDE EN ÉCOULEMENT

(30) Priorität: 23.09.2011 DE 102011083287
(43) Veröffentlichungstag der Anmeldung: 30.07.2014
(73) Patentinhaber: Robert Bosch GmbH, 70442 Stuttgart (DE)
(72) Erfinder: WAGNER, Ulrich, 70197 Stuttgart (DE); KONZELMANN, Uwe, 71679 Asperg (DE)
(86) Internationale Anmeldenummer: PCT/EP2012/065296
(87) Internationale Veröffentlichungsnummer: WO 2013/041290

(56) Entgegenhaltungen:
- EP-A2- 1 065 475
- EP-A2- 1 544 583
- EP-A2- 1 992 917
- US-A1- 2004 074 896
- US-A1- 2004 098 210

## Beschreibung

### Stand der Technik

Die Erfindung geht aus von bekannten Vorrichtungen und Verfahren zur Erfassung mindestens einer Strömungseigenschaft eines fluiden Mediums, beispielsweise eines in einer Hauptströmungsrichtung durch ein Strömungsrohr strömendes fluides Medium. Bei dem fluiden Medium kann es sich grundsätzlich um Gase und/oder Flüssigkeiten handeln, insbesondere um Luft, beispielsweise Ansaugluft in einem Ansaugtrakt einer Brennkraftmaschine eines Kraftfahrzeuges. Auch andere Einsatzgebiete sind jedoch denkbar. Bei der mindestens einen zu bestimmenden Strömungseigenschaft kann es sich grundsätzlich um einen beliebigen physikalischen und/oder chemischen Parameter des strömenden fluiden Mediums handeln. Insbesondere kann es sich bei der Strömungseigenschaft beispielsweise um einen Massenstrom und/oder um einen Volumenstrom und/oder um einen Luftmassenstrom handeln.

Beispielsweise wird zu einer Durchflussmessung von Ansaugluft, insbesondere im Kraftfahrzeug, bevorzugt ein thermisches Messverfahren verwendet. Das thermische Messverfahren zeichnet sich durch direkte Erfassung der gesuchten Strömungseigenschaft, insbesondere einer Messgröße, nämlich beispielsweise der Luftmasse, durch hohe Dynamik und/oder durch einen weiten Erfassungsbereich des Luftmassenstroms aus. Die Erfindung wird im Folgenden, ohne Beschränkung weiterer möglicher Ausgestaltungen, insbesondere beschrieben unter Bezugnahme auf eine Luftmassenmessung, beispielsweise im Ansaugtrakt einer Brennkraftmaschine. Aus dem Stand der Technik sind zahlreiche Luftmassenmesser, insbesondere thermische Luftmassenmesser, beispielsweise Heißfilmluftmassenmesser (HFM) 136, bekannt, beispielsweise aus Robert Bosch GmbH: Sensoren im Kraftfahrzeug, erste Auflage 2010, Seiten 146 bis 149. Insbesondere kann es sich bei diesen Vorrichtungen um sogenannte Heißfilmluftmassenmesser handeln, welche in der Regel als Steckfühler ausgestaltet sind und welche üblicherweise mindestens einen Kanal umfassen, durch welchen zumindest ein Teil des strömenden fluiden Mediums geleitet wird. In dem Kanal ist üblicherweise ein Sensorelement, beispielsweise ein Heißfilmluftmassenmesserchip (HFM-Chip), angeordnet, welcher mindestens ein Heizelement und mindestens zwei jeweils stromauf und stromab des Heizelements angeordnete Temperaturfühler umfasst. Aus einer Asymmetrie einer Temperaturverteilung bei Vorhandensein eines Massenstroms, insbesondere über das Sensorelement, kann auf den Massenstrom des fluiden Mediums, beispielsweise die Ansaugluft, geschlossen werden.

Aus DE 196 03 346 A1 ist eine Vorrichtung zur Bestimmung des Durchsatzes eines strömenden Mediums bekannt, wobei eine sich in Folge eines Temperaturunterschiedes einstellende Messspannung an einer Brückendiagonale einer Auswerteeinrichtung zur Bestimmung des Durchsatzes erfasst wird, wobei eine Heizspannung konstant oder abschnittsweise konstant ist und die Messspannung in der Auswerteeinrichtung mittels wenigstens einer abgelegten Kennlinie, die einen Zusammenhang zwischen Messspannung und Durchsatz des strömenden Mediums herstellt, ausgewertet wird.

Aus DE 43 24 040 B4 ist ein Massenstromsensor bekannt, wobei Temperaturmessfühler symmetrisch zu einem Heizer angeordnet sind, mit Auswertemitteln, die durch Messung der Signale der Temperaturmessfühler ein Sensorsignal bilden, und mit Regelmitteln, die eine Übertemperatur des Heizers, das heißt die Temperaturdifferenz relativ zum Medienstrom, regeln. Die Regelmittel regeln die Temperatur des Heizers in Abhängigkeit von der Temperatur des Medienstroms so, dass die Übertemperatur mit steigender Temperatur des Mediumstromes größer wird.

Aus EP 0 859 943 B1 ist eine Vorrichtung zur Bestimmung des Durchsatzes eines strömenden Mediums bekannt, wobei eine Verbesserung des Temperaturverhaltens erzielt wird, insbesondere indem eine bekannte Schaltungsanordung durch eine zusätzliche Widerstandsbrückenschaltung ergänzt wird, wobei diese zusätzliche Widerstandsbrückenschaltung einen Hochtemperaturabgleich ermöglicht.

Aus EP 1 065 475 A2 ist ein Verfahren zum Messen eines Gasflusses bekannt. Der Sensor besitzt eine dünne Membran, auf der ein Heizelement und zwei Temperatursensoren angeordnet sind. Mit den Temperatursensoren werden insgesamt drei Temperaturdifferenzen gemessen und in geeigneter Weise verknüpft. So entsteht ein Messsignal, welches im wesentlichen unabhängig von der Membrandicke bzw. allfälligen Verschmutzungen ist.

Bekannte Vorrichtungen und Verfahren weisen nachteilig typischerweise eine prinzipbedingte Empfindlichkeit gegenüber Kontamination des Sensorelements aus. Durch Kontamination des Sensorelements kann beispielsweise eine Änderung der Wärmeleitung und/oder eine Änderung der Wärmeabgabe an die Luft und/oder eine Änderung der lokalen Umstörmung des Sensorelements auftreten, wodurch beispielsweise eine Änderung des Messsignals bewirkt werden kann. Eine Kontamination einer Membran des Sensorelements kann beispielsweise abhängig von einem Ort der Schmutzablagerung zu einer Verfälschung des Messsignals führen.

Wünschenswert wäre daher eine Reduktion eines Einflusses von Kontamination auf das Messsignal eines thermischen Luftmassenmessers.

### Offenbarung der Erfindung

Es werden dementsprechend ein Verfahren und eine Vorrichtung zur Erfassung mindestens einer Strömungseigenschaft eines strömenden fluiden Mediums vorgeschlagen. Bei der Strömungseigenschaft kann es sich prinzipiell um eine beliebige chemische und/oder physikalische Eigenschaft des strömenden fluiden Mediums handeln. Insbesondere kann es sich um einen Massenstrom und/oder einen Volumenstrom des fluiden Mediums handeln. Bei dem fluiden Medium kann es sich allgemein um ein oder mehrere Gase und/oder Flüssigkeiten handeln. Bevorzugt kann es sich bei dem fluiden Medium um eine Ansaugluft in einem Kraftfahrzeug handeln. Bei dem erfindungsgemäßen Verfahren wird mindestens ein Sensorelement verwendet. Bei dem Sensorelement kann es sich allgemein um eine Vorrichtung handeln, welche zur Erfassung der Strömungseigenschaft des strömenden fluiden Mediums dienen kann. Das Sensorelement umfasst mindestens ein Heizelement und mindestens zwei Temperaturmessfühler. Bei dem Sensorelement kann es sich insbesondere um ein Element handeln, welches eingerichtet ist, um die mindestens eine Strömungseigenschaft des strömenden fluiden Mediums qualitativ und/oder quantitativ zu erfassen und/oder beispielsweise in geeignete Messsignale, insbesondre elektrische und/oder optische Signale, umzuwandeln. Insbesondere kann das Sensorelement mindestens einen mit dem strömenden fluiden Medium in Kontakt bringbaren Sensorchip, beispielsweise einen Heißfilmluftmassenmesser- Sensorchip, umfassen. Beispielsweise kann das Sensorelement mindestens einen Sensorchip mit einer Messoberfläche umfassen. Das Sensorelement und/oder die Vorrichtung kann bevorzugt als Anemometer ausgestaltet sein. Bei dem Heizelement kann es sich prinzipiell um eine Vorrichtung handeln, welche eingerichtet ist, um mindestens einen Teil des Sensorelements zu erwärmen, insbesondere um mindestens einen Teil des Sensorelements auf eine bestimmte vorgewählte Temperatur zu regeln. Das Heizelement kann beispielsweise auf der Messoberfläche angeordnet sein. Bei dem Heizelement kann es sich beispielsweise um mindestens einen Heizwiderstand handeln. Bei dem Temperaturmessfühler kann es sich prinzipiell um eine Vorrichtung handeln, welche eingerichtet ist um mindestens eine Temperatur, insbesondere eine Temperatur des Sensorelements, zu erfassen. Bei den zwei Temperaturmessfühlern kann es sich beispielsweise um mindestens zwei Temperaturmesswiderstände handeln, welche, wie beispielsweise auch das Heizelement, auf der Messoberfläche angeordnet sein können.

Mittels des Sensorelements wird mindestens eine erste Messgröße und mindestens eine von der ersten Messgröße verschiedene zweite Messgröße erfasst. Bei der ersten Messgröße und/oder der zweiten Messgröße kann es sich prinzipiell um eine beliebige erfassbare Eigenschaft des Sensorelements handeln. Bei der Messgröße kann es sich beispielsweise um eine chemischen und/oder physikalische Messgröße handeln. Der Ausdruck "verschiedene" kann bevorzugt derart verstanden werden, dass es sich bei der ersten Messgröße um eine andere physikalische und/oder chemische Messgröße handelt als bei der zweiten Messgröße.

Die erste Messgröße und die zweite Messgröße sind durch die Strömungseigenschaft beeinflussbar. Bei der ersten Messgröße und/oder der zweiten Messgröße kann es sich insbesondere um elektrische Messgrößen handeln. Bei der ersten Messgröße und/oder der zweiten Messgröße kann es sich beispielsweise um jeweils einen einzelnen Messwert handeln, bevorzugt kann es sich um eine Messreihe, beispielsweise bestehend aus mehreren Messwerten, handeln. Insbesondere kann es sich bei der ersten Messgröße und/oder der zweiten Messgröße um eine Messreihe unter Variation eines Parameters handeln, wobei der Parameter ein beliebiger physikalischer und/oder chemischer Parameter sein kann, beispielsweise die Strömungseigenschaft des strömenden fluiden Mediums. Beispielsweise kann es sich bei der ersten Messgröße und/oder der zweiten Messgröße auch um eine Auswertung einer Messreihe handeln. Bei der ersten Messgröße und/oder der zweiten Messgröße kann es sich beispielsweise um eine Temperaturdifferenz und/oder eine Temperatur und/oder eine elektrische Spannung und/oder eine Spannungsdifferenz und/oder einen elektrischen Strom und/oder eine Stromdifferenz und/oder einen ohmschen Widerstand und/oder eine Widerstandsdifferenz und/oder eine Leistung und/oder eine Leistungsdifferenz handeln. Unter dem Ausdruck "beeinflussbar" kann insbesondere verstanden werden, dass sich die erste Messgröße und/oder die zweite Messgröße ändert, insbesondere nachweisbar ändert, falls sich die Strömungseigenschaft ändert.

Aus der ersten Messgröße und der zweiten Messgröße wird mindestens eine Korrektur, insbesondere mindestens ein Korrekturfaktor und/oder mindestens ein Korrekturvektor, generiert. Unter einer Korrektur kann prinzipiell ein Rechenverfahren und/oder ein Rechenschema verstanden werden. Die Korrektur kann bevorzugt dazu dienen, eine erfasste Messgröße, beispielsweise die Strömungseigenschaft, insbesondere die erste Messgröße und/oder die zweite Messgröße, an eine reale Strömungseigenschaft anzunähern. Insbesondere kann die Korrektur verwendet werden, um Messfehler, beispielsweise systematische Fehler, insbesondere systematische Messfehler, beispielsweise bei der Erfassung der Strömungseigenschaft, zu mindern. Alternativ oder zusätzlich kann die Korrektur verwendet werden, um eine Kalibrierung, beispielsweise eine Kalibrierung zur Erfassung der Strömungseigenschaft, zu erhalten und/oder zu aktualisieren und/oder zu präzisieren. Unter dem Ausdruck "generieren" kann hierbei verstanden werden, dass die Korrektur durch Berechnung und/oder Messung und/oder Simulation und/oder Kalibration, beispielsweise im Neuzustand, erhalten werden kann. Unter dem Korrekturvektor kann beispielsweise eine numerische, bevorzugt dimensionslose, Größe verstanden werden, welche beispielsweise im Neuzustand, bevorzugt einmalig, festgelegt wird, beispielsweise mittels einer Kalibrierung, insbesondere können für verschiedene Strömungseigenschaften beispielsweise mehrere Korrekturvektoren hinterlegt sein, insbesondere in einem Speicher der Vorrichtung. Der Korrekturvektor kann beispielsweise abhängig von der ersten Messgröße und/oder der zweiten Messgröße während des erfindungsgemäßen Verfahrens aus dem Speicher ausgewählt werden.

Die Strömungseigenschaft wird aus der ersten Messgröße und der zweiten Messgröße unter Berücksichtigung der Korrektur bestimmt. Unter dem Ausdruck "unter Berücksichtigung bestimmen" kann beispielsweise verstanden werden, dass die Korrektur mit der ersten Messgröße und/oder der zweiten Messgröße verrechnet wird und/oder abgeglichen wird.

Eine Veränderung eines Zustands eines Sensorelements kann die erste Messgröße und die zweite Messgröße in unterschiedlicher Weise beeinflussen. Bei dem Zustand kann es sich beispielsweise um mindestens eine Kontaminierung und/oder mindestens eine Verschmutzung mindestens eines Teils des Sensorelements und/oder mindestens eine Temperaturänderung mindestens eines Teils des Sensorelements handeln. Bei der Veränderung des Zustands kann es sich beispielsweise um eine Veränderung der Kontaminierung und/oder der Verschmutzung und/oder des Ortes der Kontaminierung und/oder des Ortes der Verschmutzung handeln. Der Ausdruck "in unterschiedlicher Weise beeinflussen" kann insbesondere bedeuten, dass die erste Messgröße eine andere Veränderung als die zweite Messgröße erfährt, falls sich der Zustand des Sensorelements ändert, beispielsweise falls sich das Sensorelement stärker verschmutzt, insbesondere im Vergleich zu einem Neuzustand.

Beispielsweise kann bei dem erfindungsgemäßen Verfahren auf den Zustand des Sensorelements geschlossen werden, insbesondere indem mindestens eine Information über den Zustand generiert wird. Hierunter kann beispielsweise verstanden werden, dass beispielsweise aus Erfahrungswerten und/oder Simulationen und/oder bekannten früheren Messreihen auf den Zustand des Sensorelements und/oder auf Informationen über den Zustand des Sensorelements geschlossen werden kann.

Die Korrektur kann beispielsweise durch mindestens einen Vergleich zwischen der ersten Messgröße und der zweiten Messgröße gebildet und/oder bestimmt und/oder generiert werden. Bei dem Vergleich kann es sich beispielsweise um eine Rechenoperation handeln, insbesondere um mindestens eine Subtraktion und/oder mindestens eine Addition und/oder mindestens eine Division und/oder mindestens eine Multiplikation. Beispielsweise kann es sich bei dem Vergleich um mindestens einen Vergleich von Maximalpunkten und/oder mindestens einen Vergleich einzelner Messwerte und/oder mindestens einen Vergleich von Messreihen und/oder mindestens einen Vergleich zweier Steigungen der Messreihen handeln, insbesondere der ersten Messgröße und der zweiten Messgröße. Im einfachsten Falle kann es sich bei dem Vergleich um einen Vergleich der ersten Messgröße und der zweiten Messgröße handeln, wobei festgestellt werden kann, ob die erste Messgröße und die zweite Messgröße übereinstimmen oder ob die erste Messgröße und die zweite Messgröße nicht übereinstimmen.

Die erste Messgröße und die zweite Messgröße werden, unabhängig voneinander, ausgewählt aus der Gruppe bestehend aus: einer zur Einstellung einer vorgegebener Temperatur des Heizelements erforderlichen Heizspannung eines Heizwiderstands des Heizelements; einem zur Einstellung einer vorgegebenen Temperatur des Heizelements erforderlichen Heizstrom durch einen Heizwiderstand des Heizelements; einer zur Einstellung einer vorgegebenen Temperatur des Heizelements erforderlichen Heizleistung eines Heizwiderstands des Heizelements; einer Temperaturdifferenz zwischen mit den Temperaturmessfühlern erfassten Temperaturen. Unter "unabhängig voneinander ausgewählt" kann insbesondere verstanden werden, dass es sich bei der ersten Messgröße um eine andere Messgröße als bei der zweite Messgröße handelt.

Die vorgegebene Temperatur des Heizelements kann beispielsweise durch Messung der Temperatur des Heizelements, beispielsweise über den Innenwiderstand des Heizelements und/oder durch mindestens einen Temperaturmessfühler an dem Heizelement, geregelt werden.

Bei der Strömungseigenschaft kann es sich bevorzugt um einen Massenstrom und/oder einen Volumenstrom handeln. Bei dem Massenstrom kann es sich beispielsweise um eine Größe handeln, welche in einer Einheit [Masse] / [Querschnittsfläche] / [Zeit] erfasst werden kann. Es kann sich also insbesondere um eine Masse des strömenden fluiden Mediums handeln, welche pro Zeiteinheit durch einen Querschnitt strömt, wobei es sich bei dem Querschnitt beispielsweise um einen Querschnitt eines Ansaugrohres in einem Kraftfahrzeug handeln kann. Bei dem Volumenstrom kann es sich beispielsweise um eine physikalische Messgröße handeln, welche in einer Einheit [Volumen] / [Querschnittsfläche] / [Zeit] erfasst werden kann. Bei dem Volumenstrom kann es sich insbesondere um ein Volumen des fluiden Mediums handeln, welches pro Zeiteinheit durch einen Querschnitt strömt, beispielsweise durch eine Querschnittsfläche eines Ansaugtraktes und/oder allgemein eines Rohres.

Bei der Bestimmung der Strömungseigenschaft können die erste Messgröße und die zweite Messgröße jeweils mit unterschiedlichen Gewichtungen berücksichtigt werden, insbesondere in der Korrektur. Hierunter kann beispielsweise verstanden werden, dass zunächst ein Mittelwert, insbesondere mit unterschiedlicher Gewichtung der ersten Messgröße im Vergleich zu der zweiten Messgröße, bestimmt werden kann. Insbesondere kann es sich bei der Gewichtung um einen Vorfaktor handeln, welcher beispielsweise aus Simulationen und/oder Erfahrungswerten und/oder Kalibrierungen, bekannt sein kann. Beispielsweise kann aus der ersten Messgröße und der zweiten Messgröße ein geometrisches Mittel, insbesondere mit unterschiedlicher Gewichtung der ersten Messgröße und der zweiten Messgröße, gebildet werden. Insbesondere können ein gewichteter geometrischer Mittelwert und/oder ein gewichteter arithmetischer Mittelwert gebildet werden. Allgemein kann der Ausdruck "mit unterschiedlichen Gewichtungen" bedeuten, dass aus einer Rechenoperation aus der ersten Messgröße und der zweiten Messgröße eine neue Größe bestimmt wird, wobei der Wert der neuen Größe unterschiedlich stark, insbesondere nicht gleichwertig, von der ersten Messgröße und der zweiten Messgröße bestimmt werden kann.

Aus der ersten Messgröße und der zweiten Messgröße kann beispielsweise mindestens ein Korrekturfaktor bestimmt werden. Bei dem Korrekturfaktor kann es sich bevorzugt um einen numerischen Wert, beispielsweise um einen dimensionslosen numerischen Wert, handeln, welcher beispielsweise mit der ersten Messgröße und/oder mit der zweiten Messgröße und/oder mit der neuen Größe multipliziert werden kann. Bei dem Ergebnis kann es sich beispielsweise um die Strömungseigenschaft handeln, wobei diese Strömungseigenschaft dem realen Wert der Strömungseigenschaft bevorzugt näher kommt als die erste Messgröße und/oder die zweite Messgröße. Bei dem realen Wert kann es sich insbesondere um einen Wert handeln, welcher die Strömungseigenschaft bevorzugt ohne Messfehler, insbesondere ohne systematische Messfehler, angibt. Die Strömungseigenschaft, insbesondere eine korrigierte Strömungseigenschaft, kann insbesondere mittels mindestens einer vorgegebenen Relation aus einer der Messgrößen, beispielsweise der ersten Messgröße oder der zweiten Messgröße, als unkorrigierte Strömungseigenschaft bestimmt werden. Bei der korrigierten Strömungseigenschaft kann es sich bevorzugt um einen Wert für die Strömungseigenschaft handeln, welcher näher an dem realen Wert liegt als die unkorrigierte Strömungseigenschaft, beispielsweise die erste Messgröße und/oder die zweite Messgröße. Bei der Relation kann es sich beispielsweise um eine mathematische Beziehung handeln und/oder eine Zuordnung, beispielsweise eine Zuordnung von Tabellenwerten, beispielsweise aus mindestens einer Simulation und/oder aus mindestens einem Erfahrungswert. Die Relation kann beispielsweise mindestens eine Kalibration, welche beispielsweise im Neuzustand des Sensorelements durchgeführt werden kann, berücksichtigen. Bei der unkorrigierten Strömungseigenschaft kann es sich insbesondere um die erste Messgröße und/oder die zweite Messgröße und/oder den Mittelwert, insbesondere mit unterschiedlicher Gewichtung, und/oder den gewichteten geometrischen Mittelwert und/oder den gewichteten arithmetischen Mittelwert handeln. Die unkorrigierte Strömungseigenschaft kann beispielsweise mit dem Korrekturfaktor, insbesondere als Korrektur, multipliziert werden. Prinzipiell kann die unkorrigierte Strömungseigenschaft auch mit mehreren Korrekturfaktoren multipliziert und/oder durch mehrere Korrekturfaktoren dividiert werden. Bevorzugt kann die unkorrigierte Strömungseigenschaft mit dem Korrekturfaktor multipliziert und/oder durch ihn dividiert werden, um die Strömungseigenschaft genauer und/oder fehlerfreier zu bestimmen, insbesondere um eine möglichst reale Strömungseigenschaft, insbesondere den realen Wert, zu bestimmen.

Die Strömungseigenschaft kann beispielsweise mittels mindestens einer vorgegebenen Relation, beispielsweise bekannt aus der Kalibration und/oder aus mindestens einer Simulation, aus einer der Messgrößen, beispielsweise aus der ersten Messgröße und/oder aus der zweiten Messgröße und/oder einem Mittelwert aus der ersten Messgröße und der zweiten Messgröße, beispielsweise mit der Gewichtung, als unkorrigierte Strömungseigenschaft, bestimmt werden.

Beispielsweise kann die unkorrigierte Strömungseigenschaft mit mindestens einem Funktionswert einer Korrekturfunktion und/oder eines Korrekturvektors multipliziert und/oder dividiert werden. Bei der Korrekturfunktion kann es sich beispielsweise um eine Funktion und/oder Relation handeln, welche mindestens einer Strömungseigenschaft, bevorzugt einer Mehrzahl von Strömungseigenschaften, jeweils mindestens einen Funktionswert zuweist. Bei der Korrekturfunktion kann es sich insbesondere um mindestens einen Korrekturvektor und/oder mindestens eine Korrekturmatrix und/oder mindestens eine kontinuierliche und/oder diskontinuierliche Funktion handeln. Der Funktionswert ist bevorzugt abhängig von der Strömungseigenschaft. Bei dem Funktionswert kann es sich beispielsweise um einen Wert handeln, welcher aus einer Tabelle, bevorzugt bei einer bekannten unkorrigierten Strömungseigenschaft, abgelesen werden kann und/oder mittels einer Funktion, beispielsweise einer mathematischen Funktion, berechnet werden kann und/oder durch eine Simulation aus einem unkorrigierten Messwert generiert werden kann.

Zur Auswahl des Funktionswerts der Korrekturfunktion kann bevorzugt die unkorrigierte Strömungseigenschaft angenommen werden. Prinzipiell kann es sich bei der unkorrigierten Strömungseigenschaft um die erste Messgröße oder die zweite Messgröße oder einen gewichteten Mittelwert aus der ersten Messgröße und der zweiten Messgröße oder eine Messgröße, welche sich aus der ersten Messgröße und der zweiten Messgröße berechnen lässt, handeln.

In einem weiteren Aspekt der vorliegenden Erfindung wird eine Vorrichtung zur Erfassung mindestens einer Strömungseigenschaft eines strömenden fluiden Mediums vorgeschlagen, wobei die Vorrichtung mindestens ein Sensorelement, beispielsweise ein Sensorelement wie oben beschrieben, aufweist. Bei dem Sensorelement kann es sich beispielsweise um einen HFM-Sensorchip handeln. Das Sensorelement umfasst mindestens ein Heizelement und mindestens zwei Temperaturmessfühler. Die Vorrichtung weist weiterhin mindestens eine Ansteuerung auf, wobei die Ansteuerung eingerichtet ist, um ein Verfahren nach einem der vorhergehenden Ansprüche durchzuführen.

Bei dem Sensorelement kann es sich beispielsweise um ein Sensorelement handeln, wie es aus dem Stand der Technik bekannt ist, beispielsweise aus Robert Bosch GmbH, Sensoren im Kraftfahrzeug, erste Auflage 2010, Seiten 146 bis 149. Prinzipiell kann es sich jedoch auch um ein anderes Sensorelement handeln. Das Sensorelement kann mittels mindestens einer elektrischen Verbindung mit der Ansteuerung, beispielsweise eine Ansteuer- und Auswerteschaltung, verbunden sein. Unter dem Sensorelement kann dabei allgemein ein Element verstanden werden, welches eingerichtet ist, um die mindestens eine Strömungseigenschaft des strömenden fluiden Mediums zu erfassen, beispielsweise qualitativ und/oder quantitativ zu erfassen und/oder beispielsweise in geeignete Messwerte umzuwandeln, beispielsweise in die erste Messgröße und/oder die zweite Messgröße, wie oben beschrieben, bevorzugt in elektrische und/oder optische Signale. Insbesondere kann das Sensorelement mindestens einen mit dem strömenden fluiden Medium in Kontakt bringbaren Sensorchip umfassen. Beispielsweise kann das Sensorelement mindestens einen Sensorchip mit einer Messoberfläche umfassen, wobei auf der Messoberfläche beispielsweise das Heizelement, beispielsweise mindestens ein Heizwiderstand, und die mindestens zwei Temperaturmessfühler, beispielsweise mindestens zwei Temperaturmesswiderstände, angeordnet sein können. Aus einer Asymmetrie der Temperaturverteilung, beispielsweise der Messsignale der Temperaturfühler, kann auf einen Massenstrom und/oder Volumenstrom und/oder auf eine Geschwindigkeit des fluiden Mediums geschlossen werden. Insbesondere kann beispielsweise auf einen Messwert, beispielsweise auf die erste Messgröße und/oder die zweite Messgröße, wie oben beschrieben, geschlossen werden.

Alternativ oder zusätzlich kann das Sensorelement auch andere Arten von Sensorelementen umfassen, beispielsweise mindestens einen Temperaturfühler, insbesondere einen Temperaturfühler zur Regelung des Heizelements, und/oder mindestens einen Druckfühler und/oder andere Arten von Sensorelementen, welche grundsätzlich aus dem Stand der Technik bekannt sein können. Das Sensorelement kann insbesondere der Art in der Vorrichtung aufgenommen sein, dass dieses direkt oder indirekt in Kontakt mit dem strömenden fluiden Medium steht. Beispielsweise kann das Sensorelement unmittelbar in einem Strömungsrohr aufgenommen sein, durch welches das fluide Medium zumindest teilweise bevorzugt strömt. Alternativ kann die Vorrichtung jedoch auch beispielsweise ganz oder teilweise als Steckfühler ausgestaltet sein, welcher ein Gehäuse aufweist, das in das strömende fluide Medium einbringbar ist, beispielsweise permanent oder austauschbar. So kann beispielsweise die Vorrichtung ein Strömungsrohr umfassen und/oder mit einem Strömungsrohr zusammen wirken, in welches der Steckfühler hineinragen kann, sodass der Steckfühler in den Strömungsquerschnitt des Strömungsrohres hineinragt. In dem Steckfühler kann beispielsweise, wie bei bekannten Heißfilmluftmassenmessern, mindestens ein Kanal aufgenommen sein, durch welchen zumindest ein Teil des fluiden Mediums strömen kann. Beispielsweise kann der Steckfühler mindestens eine Einlassöffnung umfassen, durch welche ein Teil des fluiden Mediums in den Kanal hineingeleitet werden kann, und/oder mindestens eine Auslassöffnung, durch welche ein Ausströmen aus dem Kanal möglich sein kann. Der Kanal kann insbesondere verzweigt ausgestalten sein und beispielsweise mindestens einen Hauptkanal umfassen, durch welchen ein Teil des fluiden Mediums strömt, sowie beispielsweise mindestens einen Bypasskanal, durch welchen beispielsweise ein aus dem Hauptkanal abgezweigter Volumenanteil des fluiden Mediums strömen kann. Das Sensorelement kann in mindestens einem Kanal angeordnet sein, insbesondere in dem Bypasskanal, beispielsweise indem eine Messoberfläche des Sensorelements, beispielsweise des Sensorchips, von dem fluiden Medium überströmt wird. Diesbezüglich kann grundsätzlich auf den oben genannten Stand der Technik verwiesen werden.

Unter der Ansteuerung, beispielsweise einer Ansteuer- und/oder Auswerteschaltung, kann dabei grundsätzlich eine beliebige elektrische und/oder elektronische Schaltung verstanden werden, welche eingerichtet ist, um das Sensorelement für eine Messung anzusteuern und/oder mindestens ein Messsignal, beispielsweise die erste Messgröße und/oder die zweite Messgröße, des Sensorelements aufzunehmen und bevorzugt um das erfindungsgemäße Verfahren durchzuführen. Beispielsweise kann es sich bei der Ansteuerung um eine Schaltung handeln, welche das Sensorelement mit mindestens einer Spannung und/oder mindestens einem Strom versorgt, welche beispielsweise für das erfindungsgemäße Verfahren benötigt werden. Alternativ oder zusätzlich kann die Ansteuerung jedoch auch mindestens einen Messsignalaufnehmer umfassen, mittels dessen mindestens ein Messsignal des Sensorelements, beispielsweise die erste Messgröße und/oder die zweite Messgröße, erfasst werden können. Darüber hinaus kann die Ansteuerung Elemente umfassen, welche beispielsweise einer Signalverarbeitung und/oder Signalvorverarbeitung dienen können. So kann beispielsweise in der Ansteuerung die Korrektur zumindest teilweise erfolgen, beispielsweise verbunden mit einer Digitalisierung von Messsignalen, beispielsweise der ersten Messgröße und/oder der zweiten Messgröße. Die Ansteuerung kann dementsprechend eine oder mehrere elektronische Bauelemente umfassen, beispielsweise mindestens einen Verstärker und/oder mindestens einen Analog- Digital- Wandler, und/oder mindesten ein Speicherelement, beispielsweise den Speicher, und/oder mindestens eine Datenverarbeitungsvorrichtung. Insbesondere kann die Ansteuerung beliebige Kombinationen der genannten Elemente und/oder anderer Elemente umfassen. Die Ansteuerung kann, wie auch das Sensorelement, beispielsweise in einem Steckfühler aufgenommen sein, beispielsweise in einem Elektronikraum eines Steckfühlers, welcher vorzugsweise von dem oben beschrieben Kanal räumlich getrennt sein kann.

Bei der elektrischen Verbindung zwischen dem Sensorelement, beispielsweise dem Sensorchip, und der Ansteuerung kann es sich grundsätzlich um eine beliebige Verbindung handeln, welche eingerichtet ist, um elektrische Signale, insbesondere Spannungen und/oder Ströme und/oder Versorgungsspannungen, beziehungsweise Versorgungsströme, zu transportieren. Insbesondere kann die elektrische Verbindung mindestens eine Drahtverbindung umfassen, mittels derer beispielsweise mindestens ein Anschlusskontakt, beispielsweise mindestens ein Anschlusspad, der Ansteuerung mit mindestens einem Anschlusskontakt, beispielsweise mindestens einem Anschlusspad, des Sensorelements verbunden werden kann. Derartige Bondingtechniken sind dem Fachmann grundsätzlich bekannt. Beispielsweise können Dünndraht- Bondingtechniken eingesetzt werden und/oder andere Bondingtechniken.

Das vorgeschlagene Verfahren und die vorgeschlagene Vorrichtung können gegenüber bekannten Verfahren und Vorrichtungen der genannten Art eine Vielzahl von Vorteilen aufweisen. Ein Vorteil des Verfahrens kann beispielsweise sein, dass keine zusätzlichen Strukturen auf einer Oberfläche des Sensorelements, beispielsweise des Sensorchips, insbesondere wie aus dem Stand der Technik bekannt, benötigt werden, da das erfindungsgemäße Verfahren, beispielsweise zu einer Bestimmung der Luftmasse aus einem Heizersignal, beispielsweise aus der Heizspannung und/oder aus der Heizleistung, lediglich eine Anpassung der Signalverarbeitung erfordern kann, insbesondere eine Anpassung der Ansteuerung, im Vergleich zu aus dem Stand der Technik bekannten Sensorvorrichtung und/oder Verfahren.

Die Bestimmung beispielsweise einer Luftmasse aus dem Heizersignal kann empfindlich auf Widerstandsdriften reagieren. Daher kann eine Bestimmung und/oder Erfassung aus dem Heizersignal nicht so langzeitstabil sein wie eine Methode der Auswertung von Temperaturunterschieden, wie beispielsweise aus dem Stand der Technik bekannt. Beispielsweise kann im Allgemeinen aus dem Heizersignal keine Strömungsrichtung abgeleitet werden. Zur Korrektur eines Luftmassensignals, insbesondere nach dem vorgeschlagenen erfindungsgemäßen Verfahren, kann bei großen und/oder kontaminationsbedingten Abweichungen eine Genauigkeit einer Heizerauswertung, insbesondere einer Erfassung mittels des Heizersignals, allerdings ausreichend sein. Durch das vorgeschlagene Verfahren und/oder die vorgeschlagene Vorrichtung kann insbesondere eine Detektion und/oder Kompensation einer kontaminationsbedingten Drift ermöglicht werden, insbesondere durch Vergleich verschiedener, von ein und demselben Sensorelement abgeleiteter Messgrößen, beispielsweise einer zugeführten Heizleistung versus einer Temperaturverteilung auf dem Sensor.

Das erfindungsgemäße Verfahren kann beispielsweise zur Messung der Ansaugluft in Kraftfahrzeugen Anwendung finden, beispielsweise bei sämtlichen aus dem Stand der Technik bekannten thermischen Luftmassenmessern, bevorzugt bei thermischen Luftmassenmessern, welche ein Sensorelement auf Basis von mikromechanischen Technologien umfassen. Die Anwendung kann beispielsweise mit anderen Sensorelementen kombiniert werden. Eine Anwendung mit anderen Sensorelementen ist somit prinzipiell nicht ausgeschlossen, kann aber beispielsweise deutlich aufwendiger werden.

Durch das erfindungsgemäße Verfahren und die erfindungsgemäße Vorrichtung, insbesondere durch den Vergleich verschiedener Auswertemethoden, insbesondere der ersten Messgröße und der zweiten Messgröße, kann es also möglich sein auf eine Art und/oder Intensität der Verschmutzung Rückschlüsse zu ziehen und/oder kompensatorische Maßnahmen zur Korrektur eines Luftmassensignals, beispielsweise der ersten Messgröße und/oder der zweiten Messgröße, zu ergreifen.

### Kurze Beschreibung der Zeichnungen

Ausführungsbeispiele der Erfindung sind in den Zeichnungen dargestellt und werden im Folgenden näher erläutert.

Es zeigen:
- Figur 1: ein Ausführungsbeispiel einer erfindungsgemäßen Vorrichtung als perspektivische Darstellung mit einer Darstellung eines Sensorelements in Vergrößerung und einer Darstellung eines Teils des erfindungsgemäßen Verfahrens;
- Figur 2: eine Darstellung vier verschiedener erste Messgrößen nach dem erfindungsgemäßen Verfahren für verschiedene Verschmutzungsgrade;
- Figur 3: eine Darstellung vier verschiedener zweiter Messgrößen nach dem erfindungsgemäßen Verfahren für die vier verschiedenen Verschmutzungsgrade; und
- Figur 4: eine Darstellung zu einem erfindungsgemäßen Verfahren.

### Ausführungsformen der Erfindung

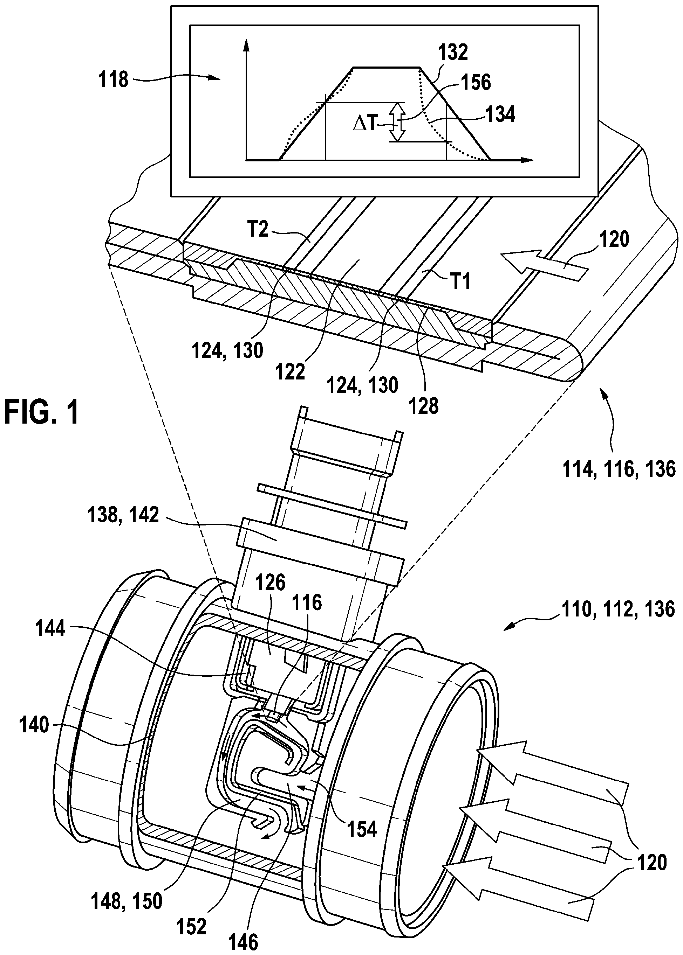

In Figur 1 ist eine perspektivische Darstellung 110 eines erfindungsgemäßen Ausführungsbeispiels einer Vorrichtung 112 sowie eine vergrößerte Darstellung 114 eines erfindungsgemäßen Sensorelements 116 sowie ein Teil eines Messprinzips 118 des erfindungsgemäßen Verfahrens dargestellt.

In dem erfindungsgemäßen Verfahren zur Erfassung mindestens einer Strömungseigenschaft eines strömenden fluiden Mediums 120, in Figur 1 beispielsweise durch Pfeile, welche die Strömungsrichtung angeben können, dargestellt, wird mindestens ein Sensorelement 116 verwendet. Das Sensorelement 116 umfasst mindestens ein Heizelement 122, welches beispielsweise als Heizzone ausgestaltet sein kann, und mindestens zwei Temperaturmessfühler 124. Die erfindungsgemäße Vorrichtung 112 zur Erfassung der mindestens einen Strömungseigenschaft des strömenden fluiden Mediums 120 weist neben dem mindestens einen Sensorelement 116, welches mindestens ein Heizelement 122 und mindestens zwei Temperaturmessfühler 124 umfasst, weiterhin mindestens eine Ansteuerung 126 auf. Die Ansteuerung 126 ist eingerichtet, um das erfindungsgemäße Verfahren durchzuführen.

Beispielsweise können auf einer Membran 128, insbesondere einer dünnen Membran 128, verschiedene temperaturempfindliche Widerstände 130, beispielsweise die zwei Temperarturmessfühler 124, sitzen. In der Mitte der Membran 128 kann beispielsweise ein Widerstand als Heizung, insbesondere als Heizelement 122, betrieben werden. Mit Hilfe dieses Heizelements 122 kann beispielsweise eine Übertemperatur gegenüber der Umgebung eingestellt werden. Widerstände 130 in Bereichen stromauf, insbesondere zu einer Messung einer Temperatur T1, und stromab, insbesondere zur Messung einer Temperatur T2, des Heizelements 122, insbesondere der Heizung, können beispielsweise als Temperaturfühler 124 betrieben werden. Der Ausdruck "stromauf kann hierbei insbesondere auf eine Lokalisation entfernt von dem Heizelement 122 hindeuten, insbesondere auf eine Lokalisation in Strömungsrichtung des strömenden fluiden Mediums 120 vordem Heizelement 122. Der Ausdruck "stromab" kann hierbei ebenfalls insbesondere auf eine Lokalisation entfernt von dem Heizelement 122 hindeuten, insbesondere auf eine Lokalisation in Strömungsrichtung des strömenden fluiden Mediums 120 hinter dem Heizelement 122. In dem erfindungsgemäßen Verfahren kann beispielsweise das Sensorelement 116, insbesondere die Membran 128, angeströmt werden. Gegenüber einem Zustand ohne Strömung, bei welchem üblicherweise nährungsweise eine trapezförmige Temperaturverteilung zu erwarten ist, wie in dem Messprinzip 118 in Figur 1 als durchgezogene Linie 132 dargestellt, wird bei einem Zustand mit Strömung bevorzugt insbesondere ein stromauf liegender Bereich abgekühlt, wobei ein stromab liegender Bereich nährungsweise unverändert bleibt, wie in der gepunkteten Linie 134 in dem Messprinzip 118 aus Figur 1 dargestellt. Die durchgezogene Linie 132 zeigt insbesondere eine Temperaturverteilung des Sensors ohne Luftströmung, wobei die gepunktete Line 134 bevorzugt eine Temperaturverteilung des Sensorelements 116 mit Luftströmung darstellt. Es kann insbesondere eine Temperaturdifferenz ΔT zwischen den Temperaturmessfühlern 124 entstehen, insbesondere zwischen den Temperaturen T1 und T2, beispielsweise als Signal. Die Temperaturdifferenz kann insbesondere mit Hilfe der temperaturempfindlichen Widerstände 130 bestimmt werden, insbesondere der Temperaturmessfühler 124.

Die Vorrichtung 112 kann bevorzugt als Heißfilmluftmassenmesser (HFM) 136 ausgestaltet sein, welcher einen Steckfühler 138 umfassen kann, welcher beispielsweise in ein Strömungsrohr 140, wie in der perspektivischen Darstellung 110 in Figur 1 dargestellt, eines Ansaugtrakts einer Brennkraftmaschine eingesteckt werden kann. Der Steckfühler 138 kann mindestens ein Steckfühlergehäuse 142 und/oder mindestens einen Elektronikraum 144 und/oder mindestens einen Messkanalraum 146 aufweisen. In dem Messkanalraum 146 kann eine Kanalstruktur 148 vorgesehen sein, beispielsweise mit mindestens einem Hauptkanal 150 und/oder mindestens einem Bypasskanal 152. Durch eine Einlassöffnung 154 kann das fluide Medium 120, beispielsweise Luft, in die Kanalstruktur 148 einströmen und diese bevorzugt durchströmen. Die Ansteuerung 126 kann weiterhin insbesondere mehrere Elektronikkomponenten umfassen.

In dem erfindungsgemäßen Verfahren, in den Figuren 1 bis 4 dargestellt, wird mittels des Sensorelements 116 mindestens eine erste Messgröße 156 und mindestens eine von der ersten Messgröße 156 verschiedene zweite Messgröße erfasst. Die erste Messgröße 156 und die zweite Messgröße sind durch die Strömungseigenschaft beeinflussbar. Aus der ersten Messgrößen 156 und der zweiten Messgröße wird mindestens eine Korrektur, insbesondere mindestens ein Korrekturfaktor und/oder mindestens ein Korrekturvektor, generiert. Die Strömungseigenschaft wird aus der ersten Messgröße 156 und der zweiten Messgröße unter Berücksichtigung der Korrektur bestimmt.

Beispielsweise kann eine Widerstandsdifferenz, insbesondere zwischen den Widerständen 130, insbesondere zwischen den Temperaturmessfühlern 124, und/oder ein hierzu korrespondierender Temperaturunterschied ΔT zwischen den beiden Temperaturmessfühlern 124 als erste Messgröße 156 und/oder als Luftmassensignal verwendet werden, insbesondere mit Hilfe entsprechender Auswerteschaltungen, insbesondere der Ansteuerung 126. Als zweite Messgröße oder alternativ als erste Messgröße 156 und/oder als Messsignal für die Luftmasse kann beispielsweise eine Heizleistung verwendet werden, die erforderlich ist um den Heizer, insbesondere das Heizelement 122, auf einer definierten Temperatur zu halten.

Allgemein gesprochen ist es möglich auf verschiedenen Stellen der Membran 128 Temperaturen zu erfassen und/oder mit Heizungen, insbesondere mit dem Heizelement 122, definierte Temperaturen einzustellen. Diese Temperaturen und/oder Temperaturunterschiede und/oder Heizspannungen können beispielsweise als erste Messgröße 156 oder als zweite Messgröße zur Bestimmung eines Luftmassensignals, insbesondere der Strömungseigenschaft, herangezogen werden.

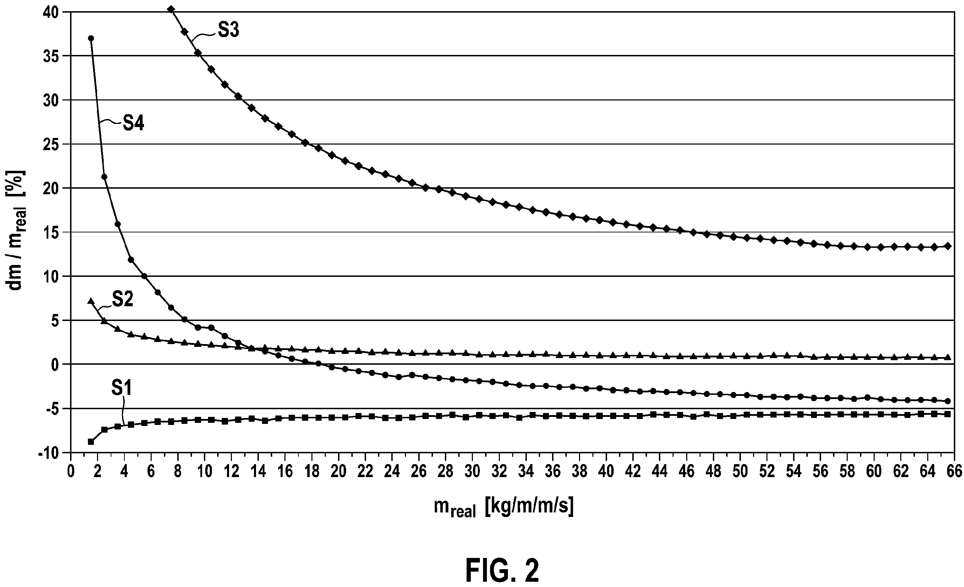

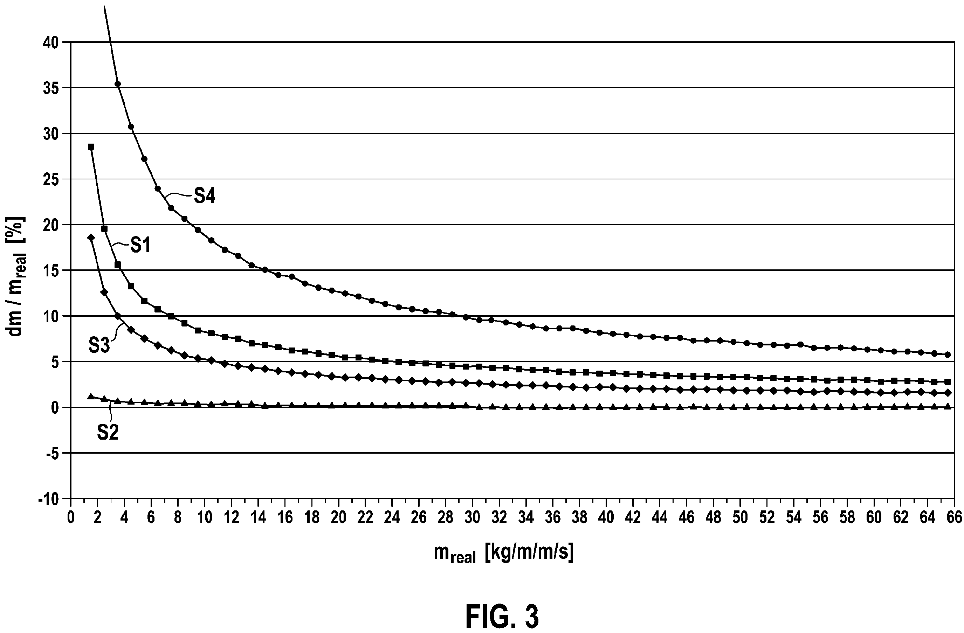

Eine Veränderung eines Zustands des Sensorelements 116 kann die erste Messgröße 156 und die zweite Messgröße bevorzugt in unterschiedlicher Weise beeinflussen. Bei dem Zustand und/oder der Veränderung des Zustands kann es sich beispielsweise um eine Kontamination des Sensorelements 116, insbesondere der Membran 128, handeln. Wird beispielsweise die Membran 128 kontaminiert, kann dies abhängig vom Ort einer Schmutzablagerung zu einer Verfälschung des Messsignals, insbesondere zu einer Verfälschung der ersten Messgröße 156 und/oder der zweiten Messgröße führen. Ein Ausmaß und eine Form der Verfälschung kann aber wesentlich durch die Methode der Auswertung, also zum Beispiel Temperaturdifferenz ΔT der Heizfühler, beispielsweise der Temperaturmessfühler 124, versus Strombedarf des Heizers, beispielsweise des Heizelements 122, bestimmt sein. In den Figuren 2 und 3 werden beispielhaft insbesondere Untersuchungen mit der erfindungsgemäßen Vorrichtung 112, insbesondere mit dem Sensorelement 116, gezeigt. Dargestellt ist in Figur 2 insbesondere ein Kennlinienfehler bei verschiedenartiger Verschmutzung, insbesondere bei vier verschiedenen Verschmutzungen, bei einer Standardauswertung, beispielsweise bei Auswertung der Temperaturdifferenz ΔT, insbesondere der ersten Messgröße 156, beispielsweise gemessen durch die Temperaturmessfühler 124. Bei dem Kennlinienfehler kann es sich insbesondere um eine Abweichung zwischen der ersten Messgröße 156, beispielsweise dem Temperaturunterschied ΔT, gegenüber einer realen Strömungseigenschaft handeln. Der Kennlinienfehler ist hierbei insbesondere auf der y-Achse als Unterschied einer Luftmasse dm im Vergleich zu einer realen Luftmasse mᵣₑₐₗ, bevorzugt als realer Wert, in Prozent dargestellt. Auf der x- Achse ist insbesondere eine Luftmasse, beispielsweise eine reale Luftmasse, bevorzugt ein flächenspezifischer Luftmassenstrom, mᵣₑₐₗ in Kilogramm / Meter / Meter / Sekunde dargestellt, insbesondere in einem Bereich von einem Leerlauf bis zu einem Volllastbereich. Es handelt sich in Figur 2 insbesondere um eine berechnete Luftmassenabweichung, insbesondere um einen berechneten Kennlinienfehler. Beispielhaft werden, ausgedrückt durch vier verschiedene Linien in Figur 2 und Figur 3, verschiedene Formen der Verschmutzung und/oder Kontamination betrachtet:
- S1: Gleichförmige Verschmutzung der Membran 128, insbesondere mit einer Dicke der Verschmutzung von 1 µm;
- S2: Membran 128, welche nur zuströmseitig, insbesondere stromauf, verschmutzt ist, insbesondere 1 µm dick verschmutzt, bevorzugt linear abnehmend über 10 % der Membran 128;
- S3: Membran 128, welche nur zuströmseitig, insbesondere stromauf, verschmutzt ist, insbesondere 5 µm dick verschmutzt, bevorzugt linear abnehmend über 20 % der Membran 128; und
- S4: Membran 128, welche zuströmseitig, insbesondere stromauf, verschmutzt ist, insbesondere 5 µm dick verschmutzt, bevorzugt linear abnehmend über 20 % der Membran 128, wobei der Rest der Membran 128 insbesondere 2 µm dick verschmutzt ist.

Die Schmutzschicht kann beispielsweise eine Wärmeleitung von 0,3 W / m / K aufweisen. Figur 3 zeigt insbesondere den Kennlinienfehler dm / mᵣₑₐₗ in Prozent bei verschiedenartiger Verschmutzung, insbesondere für die Fälle S1 bis S4, wie oben beschrieben, bei Auswertung einer Heizerspannung, beispielsweise als zweite Messgröße. Auf der x- Achse ist ebenfalls eine reale Luftmasse mᵣₑₐₗ in Kilogramm / Meter / Meter / Sekunde angegeben. Figur 2 zeigt somit insbesondere eine Auswertung, wie sie beispielsweise auch herkömmlich verwendet werden kann, wobei in Figur 3 eine Variante einer Auswertung gezeigt ist, bei welcher eine Spannung zur Regelung einer Heizzone, beispielsweise des Heizelements 122, ausgewertet wird. Diese zwei unterschiedlichen Auswertungen, insbesondere unterschiedlichen Messgrößen, bevorzugt die erste Messgröße 156 und die zweite Messgröße, wie in den Figuren 2 und 3 dargestellt, können miteinander verglichen werden. Die in den Figuren 2 und 3 dargestellten Fälle wurden insbesondere mit Hilfe eines Simulationsprogramms unter Berücksichtigung einer Wärmeleitung der Membran 128 und einer Wärmeabgabe an die Strömung, insbesondere an das fluide Medium 120, berechnet. Figur 2 zeigt die Kennlinienabweichung bei Standardauswertung und Figur 3 zeigt die Auswertung der Heizerspannung. In Figur 2 und 3 wird insbesondere klar, dass sich die in den jeweiligen Fällen, insbesondere bei den jeweiligen Messgrößen, insbesondere der ersten Messgröße 156 und der zweiten Messgröße, angezeigten Luftmassen mᵣₑₐₗ, insbesondere die Abweichungen dm / mᵣₑₐₗ, unterscheiden können. Wenn beispielsweise also die Luftmasse durch zwei verschiedene Methoden bestimmt wird, beispielsweise eine Luftmasse mf aus der Standardauswertung, insbesondere aus der Temperaturdifferenz, und eine Luftmasse mh aus der Heizerauswertung, können sich, eine Kalibrierung im Neuzustand vorausgesetzt, bei Verschmutzung mit simultaner oder zeitnaher Auswertung unterschiedliche Luftmassen ergeben. Hierauf basierend, insbesondere auf den Unterschied, können verschiedene Korrekturen, beispielsweise nach dem erfindungsgemäßen Verfahren, aktiviert werden.

Bei dem erfindungsgemäßen Verfahren kann beispielsweise auf den Zustand des Sensorelements 116, insbesondere auf die Verschmutzung, beispielsweise S1 bis S4, geschlossen werden, insbesondere indem bevorzugt mindestens eine Information über den Zustand, beispielsweise die Verschmutzung und/oder die Kontamination, generiert wird. Bei der Information kann es sich beispielsweise um die Information handeln, dass das Sensorelement 116 und/oder dass die Membran 128 teilweise oder ganz verschmutzt ist. Insbesondere kann beispielsweise der Ort der Verschmutzung, beispielsweise stromauf und/oder stromab, und/oder eine Dicke der Verschmutzung erfasst werden.

Die Korrektur kann durch mindestens einen Vergleich zwischen der ersten Messgröße 156, wie sie beispielsweise in Figur 2 für verschiedene Verschmutzungen dargestellt ist, und der zweiten Messgröße, wie sie beispielsweise in Figur 3 für verschiedene Messgrößen dargestellt ist, gebildet werden. Bei einem Vergleich kann es sich beispielsweise um mindestens eine Rechenoperation handeln, beispielsweise mindestens eine Subtraktion und/oder mindestens eine Addition und/oder mindestens eine Division und/oder mindestens eine Multiplikation.

Die erste Messgröße 156 und die zweite Messgröße werden unabhängig voneinander ausgewählt beispielsweise aus der Gruppe bestehend aus: einer zur Einstellung einer vorgegebenen Temperatur des Heizelements 122 erforderlichen Heizspannung eines Heizwiderstands des Heizelements 122; einem zur Einstellung einer vorgegebenen Temperatur des Heizelements 122 erforderlichen Heizstrom eines Heizwiderstandes des Heizelements 122; einer zur Einstellung einer vorgegebenen Temperatur des Heizelements 122 erforderlichen Heizleistung eines Heizwiderstands des Heizelements 122; einer Temperaturdifferenz zwischen mit den Temperaturmessfühlern 124 erfassten Temperaturen. In den Figuren 1 bis 4 dargestellten Ausführungsbeispiel ist die erste Messgröße 156 beispielsweise die Temperaturdifferenz zwischen mit den Temperaturmessfühlern 124 erfassten Temperaturen ΔT. Die zweite Messgröße ist insbesondere eine zur Einstellung einer vorgegebenen Temperatur des Heizelements 122 erforderliche Spannung, beispielsweise zwischen den Enden eines Heizwiderstands des Heizelements 122.

Bei der Strömungseigenschaft kann es sich in dem vorliegenden Beispiel insbesondere um einen Massenstrom handeln. Prinzipiell kann es sich bei der Strömungseigenschaft beispielsweise um einen Massenstrom und/oder einen Volumenstrom und/oder eine andere Strömungseigenschaft handeln oder um eine beliebige Kombination der genannten oder anderer Strömungseigenschaften.

Bei der Bestimmung der Strömungseigenschaft kann die erste Messgröße 156 und die zweite Messgröße jeweils mit unterschiedlichen Gewichtungen berücksichtigt werden, insbesondere in der Korrektur. Weiterhin kann beispielsweise aus der ersten Messgröße 156 und der zweiten Messgröße mindestens ein Korrekturfaktor bestimmt werden, wobei die Strömungseigenschaft beispielsweise mittels mindestens einer vorgegebenen Relation, beispielsweise bekannt aus der Kalibration, aus einer der Messgrößen als unkorrigierte Strömungseigenschaft bestimmt werden kann. Die unkorrigierte Strömungseigenschaft kann beispielsweise mit dem Korrekturfaktor multipliziert werden. Im erfindungsgemäßen Ausführungsbeispiel kann beispielsweise mit den unterschiedlichen Auswerteverfahren, bevorzugt bei mindestens einer bestimmten Luftmasse, beispielsweise mᵣₑₐₗ, wobei die bestimmte Luftmasse auch mindestens einen Luftmassenbereich umfassen kann, ein Korrekturfaktor kf gebildet werden, beispielsweise von der Form kf = (f ^{∗} mf + (1 - f) ^{∗} mh) / ms, wobei f beispielsweise ein weiterer Faktor sein kann, der günstigerweise beispielsweise zwischen 0 und 1, bevorzugt zwischen 0 und 0,7, liegen kann.

Die Strömungseigenschaft kann mittels mindestens einer vorgegebenen Relation, beispielsweise bekannt aus der Kalibration und/oder einer Simulation, aus einer der Messgrößen, insbesondere der ersten Messgröße 156 und/oder der zweiten Messgröße, als unkorrigierte Strömungseigenschaft bestimmt werden. Die korrigierte Strömungseigenschaft kann mit mindestens einem Funktionswert einer Korrekturfunktion 158 multipliziert werden. Bei der Korrekturfunktion 158 kann es sich insbesondere um mindestens einen Korrekturvektor und/oder mindestens eine Korrekturmatrix und/oder mindestens eine kontinuierliche Funktion und/oder mindestens eine andere Funktion handeln. Die Korrekturfunktion 158 weist insbesondere einer Mehrzahl von Strömungseigenschaften jeweils Funktionswerte zu. Der Funktionswert ist bevorzugt abhängig von der Strömungseigenschaft. Die Korrektur kann in dem dargestellten Ausführungsbeispiel mit einem luftmassenabhängigen Korrekturvektor kv(mᵣₑₐₗ), insbesondere als vorgegebene Relation und/oder Korrekturfunktion 158, erfolgen. Insbesondere kann sich die Strömungseigenschaft, insbesondere die korrigierte Strömungseigenschaft, berechnen durch ms(mᵣₑₐₗ)neu = ms(mᵣₑₐₗ) ^{∗} kv(mᵣₑₐₗ) ^{∗} kf. Zur Auswahl des Funktionswerts der Korrekturfunktion 158 kann insbesondere die unkorrigierte Strömungseigenschaft, beispielsweise die erste Messgröße 156 und/oder die zweite Messgröße, angenommen werden.

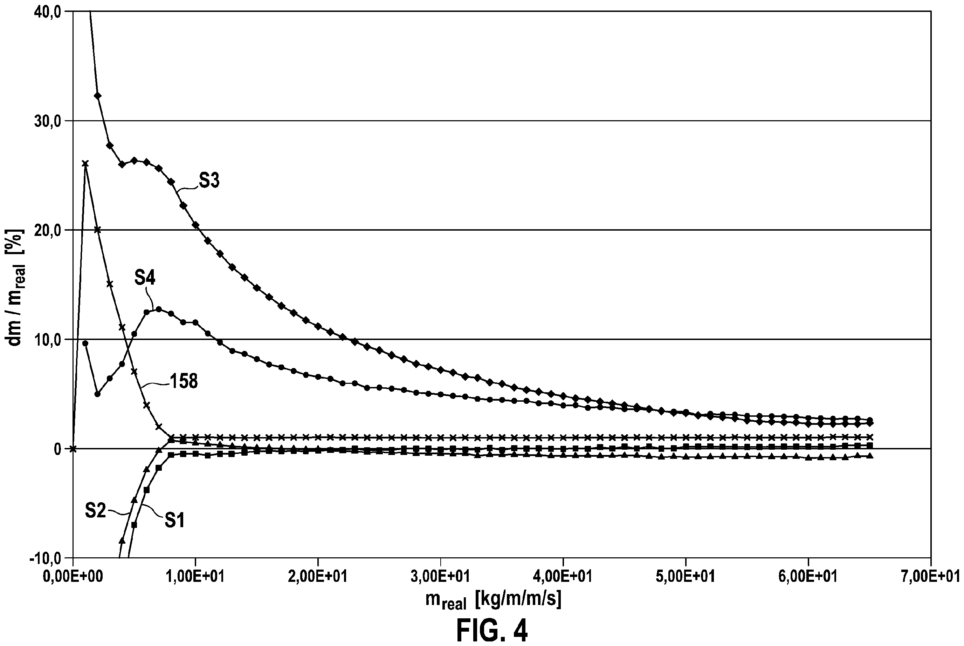

In Figur 4 sind insbesondere Kennlinienfehler bei verschiedenartigen Verschmutzungen, insbesondere S1 bis S4, mit einer Korrekturfunktion 158 nach Anwendung der Korrektur dargestellt. In dem in Figur 4 dargestellten Diagramm ist insbesondere dm / mᵣₑₐₗ in Prozent über der Luftmasse, insbesondere dem realen Wert der Luftmasse mᵣₑₐₗ, in Kilogramm / Meter / Meter / Sekunde dargestellt. Figur 4 zeigt insbesondere ein Ergebnis eines Ausführungsbeispiels des erfindungsgemäßen Verfahrens, mit f = 0,3 und kf bestimmt bei mkorr = 36 Kilogramm / Meter / Meter / Sekunde. Durch Vergleich zu den in den Figuren 2 und 3 gezeigten unkorrigierten Luftmassensignalen bei Kontamination wird in Figur 4 eine Verbesserung deutlich.

In dem erfindungsgemäßen Verfahren, insbesondere bei einer praktischen Anwendung, kann die Korrektur insbesondere nach mehrmaligem Vergleich einer Luftmasseninformation einer vorbestimmten Luftmasse mkorr, insbesondere bei mehrfachen Vergleich von ersten Messgrößen 156 mit zweiten Messgrößen, erfolgen.

Bevorzugt kann die Vorrichtung 112 im Neuzustand kalibriert werden. Beispielsweise kann hierbei eine Kennlinie für die erste Messgröße 156 und eine Kennlinie für die zweite Messgröße erzeugt werden. Beispielsweise kann im Betrieb die erste Messgröße 156 mit der zweiten Messgröße verglichen werden, beispielsweise aus einer Auswertung der Temperaturdifferenz und der Heizleistung. Falls beispielsweise die erste Messgröße 156 und die zweite Messgröße, insbesondere die erfassten Strömungseigenschaften, übereinstimmen kann darauf auf den Zustand des Sensorelements 116 geschlossen werden, insbesondere darauf, dass das Sensorelement 116 nicht verschmutzt ist. Falls bei dem Vergleich eine Diskrepanz zwischen der ersten Messgröße 156 und der zweiten Messgröße auftritt kann hieraus beispielsweise auf eine Verschmutzung des Sensorelements 116 geschlossen werden, zusätzlich kann in diesem Fall insbesondere auch mindestens eine Korrektur durchgeführt werden, beispielsweise eine Neukalibrierung und/oder eine Entfernung der Verschmutzung.

## Patentansprüche

1. Verfahren zur Erfassung mindestens einer Strömungseigenschaft eines strömenden fluiden Mediums (120), wobei mindestens ein Sensorelement (116) verwendet wird, wobei das Sensorelement (116) mindestens ein Heizelement (122) und mindestens zwei Temperaturmessfühler (124) umfasst,
**dadurch gekennzeichnet, dass**
mittels des Sensorelements (116) mindestens eine erste Messgröße (156) und mindestens eine von der ersten Messgröße (156) verschiedene zweite Messgröße erfasst werden, wobei die erste Messgröße (156) und die zweite Messgröße durch die Strömungseigenschaft beeinflussbar sind, wobei aus der ersten Messgröße (156) und der zweiten Messgröße mindestens eine Korrektur, insbesondere mindestens ein Korrekturfaktor und/oder mindestens ein Korrekturvektor, generiert wird, wobei die Strömungseigenschaft aus der ersten Messgröße (156) und der zweiten Messgröße unter Berücksichtigung der Korrektur bestimmt wird, wobei die erste Messgröße (156) und die zweite Messgröße unabhängig voneinander ausgewählt sind aus der Gruppe bestehend aus: einer zur Einstellung einer vorgegebenen Temperatur des Heizelements (122) erforderlichen Heizspannung eines Heizwiderstands des Heizelements (122); einem zur Einstellung einer vorgegebenen Temperatur des Heizelements (122) erforderlichen Heizstrom durch einen Heizwiderstand des Heizelements (122); einer zur Einstellung einer vorgegebenen Temperatur des Heizelements (122) erforderlichen Heizleistung eines Heizwiderstands des Heizelements (122); einer Temperaturdifferenz zwischen mit den Temperaturmessfühlern (124) erfassten Temperaturen.

2. Verfahren nach dem vorhergehenden Anspruch, wobei eine Veränderung eines Zustands des Sensorelements (116) die erste Messgröße (156) und die zweite Messgröße in unterschiedlicher Weise beeinflusst.

3. Verfahren nach dem vorhergehenden Anspruch, wobei bei dem Verfahren auf den Zustand des Sensorelements (116) geschlossen wird, insbesondere indem mindestens eine Information über den Zustand generiert wird.

4. Verfahren nach einem der vorhergehenden Ansprüche, wobei die Korrektur durch mindestens einen Vergleich zwischen der ersten Messgröße (156) und der zweiten Messgröße (156) gebildet wird.

5. Verfahren nach einem der vorhergehenden Ansprüche, wobei bei der Bestimmung der Strömungseigenschaft die erste Messgröße (156) und die zweite Messgröße jeweils mit unterschiedlichen Gewichtungen berücksichtigt werden, insbesondere in der Korrektur.

6. Verfahren nach einem der vorhergehenden Ansprüche, wobei aus der ersten Messgröße (156) und der zweiten Messgröße mindestens ein Korrekturfaktor bestimmt wird, wobei die Strömungseigenschaft mittels mindestens einer vorgegebenen Relation aus einer der Messgrößen als unkorrigierte Strömungseigenschaft bestimmt wird, wobei die unkorrigierte Strömungseigenschaft mit dem Korrekturfaktor multipliziert wird.

7. Verfahren nach einem der vorhergehenden Ansprüche, wobei die Strömungseigenschaft mittels mindestens einer vorgegebenen Relation aus einer der Messgrößen als unkorrigierte Strömungseigenschaft bestimmt wird, wobei die unkorrigierte Strömungseigenschaft mit mindestens einem Funktionswert einer Korrekturfunktion (158) multipliziert wird, wobei der Funktionswert abhängig ist von der Strömungseigenschaft.

8. Verfahren nach dem vorhergehenden Anspruch, wobei zur Auswahl des Funktionswerts der Korrekturfunktion (158) die unkorrigierte Strömungseigenschaft angenommen wird.

9. Vorrichtung (112) zur Erfassung mindestens einer Strömungseigenschaft eines strömenden fluiden Mediums (120), wobei die Vorrichtung (112) mindestens ein Sensorelement (116) aufweist, wobei das Sensorelement (116) mindestens ein Heizelement (122) und mindestens zwei Temperaturmessfühler (124) umfasst, wobei die Vorrichtung (112) weiterhin mindestens eine Ansteuerung (126) aufweist, wobei die Ansteuerung (126) eingerichtet ist, um ein Verfahren nach einem der vorhergehenden Ansprüche durchzuführen.

## Claims

1. Method for detecting at least one flow property of a flowing fluid medium (120), wherein at least one sensor element (116) is used, wherein the sensor element (116) comprises at least one heating element (122) and at least two temperature measurement sensors (124),
**characterized in that**
at least one first measurement variable (156) and at least one second measurement variable, which is different from the first measurement variable (156), are detected by means of the sensor element (116), wherein the first measurement variable (156) and the second measurement variable can be influenced by the flow property, wherein at least one correction, in particular at least one correction factor and/or at least one correction vector, is generated from the first measurement variable (156) and the second measurement variable, wherein the flow property is determined from the first measurement variable (156) and the second measurement variable taking into account the correction, wherein the first measurement variable (156) and the second measurement variable are selected, independently of one another, from the group comprising: a heating voltage of a heating resistor of the heating element (122), which heating voltage is required for setting a prespecified temperature of the heating element (122); a heating current through a heating resistor of the heating element (122), which heating current is required for setting a prespecified temperature of the heating element (122); a heating power of a heating resistor of the heating element (122), which heating power is required for setting a prespecified temperature of the heating element (122); a temperature difference between temperatures which are detected by the temperature measuring sensors (124).

2. Method according to the preceding claim, wherein a change in a state of the sensor element (116) influences the first measurement variable (156) and the second measurement variable in different ways.

3. Method according to the preceding claim, wherein, in the method, the state of the sensor element (116) is inferred, in particular by way of at least one item of information about the state being generated.

4. Method according to one of the preceding claims, wherein the correction is formed by at least one comparison between the first measurement variable (156) and the second measurement variable (156).

5. Method according to one of the preceding claims, wherein, when determining the flow property, the first measurement variable (156) and the second measurement variable are taken into account, in each case with different weightings, in particular in the correction.

6. Method according to one of the preceding claims, wherein at least one correction factor is determined from the first measurement variable (156) and the second measurement variable, wherein the flow property is determined as an uncorrected flow property from one of the measurement variables by means of at least one prespecified relationship, wherein the uncorrected flow property is multiplied by the correction factor.

7. Method according to one of the preceding claims, wherein the flow property is determined as an uncorrected flow property from one of the measurement variables by means of at least one prespecified relationship, wherein the uncorrected flow property is multiplied by at least one function value of a correction function (158), wherein the function value is dependent on the flow property.

8. Method according to the preceding claim, wherein the uncorrected flow property is assumed for selecting the function value of the correction function (158).

9. Apparatus (112) for detecting at least one flow property of a flowing fluid medium (120), wherein the apparatus (112) has at least one sensor element (116), wherein the sensor element (116) comprises at least one heating element (122) and at least two temperature measurement sensors (124), wherein the apparatus (112) further has at least one actuating arrangement (126), wherein the actuating arrangement (126) is designed to carry out a method according to one of the preceding claims.

## Revendications

1. Procédé de détection d'au moins une caractéristique d'écoulement d'un milieu fluide en écoulement (120), au moins un élément de détection (116) étant utilisé, l'élément de détection (116) comprenant au moins un élément chauffant (122) et au moins deux capteurs de température (124),
**caractérisé en ce que**
au moins une première grandeur de mesure (156) et au moins une deuxième grandeur de mesure, différente de la première grandeur de mesure (156), sont détectées au moyen de l'élément de détection (116), la première grandeur de mesure (156) et la deuxième grandeur de mesure pouvant être influencées par la caractéristique d'écoulement, au moins une correction, en particulier au moins un facteur de correction et/ou au moins un vecteur de correction, étant générée à partir de la première grandeur de mesure (156) et de la deuxième grandeur de mesure, la caractéristique d'écoulement étant déterminée à partir de la première grandeur de mesure (156) et de la deuxième grandeur de mesure avec prise en compte de la correction,
la première grandeur de mesure (156) et la deuxième grandeur de mesure étant choisies indépendamment l'une de l'autre dans le groupe comprenant : une tension de chauffage, requise pour régler une température prédéterminée de l'élément chauffant (122), d'une résistance chauffante (122) de l'élément de chauffage ; un courant de chauffage nécessaire au réglage d'une température prédéterminée de l'élément chauffant (122) et circulant à travers une résistance chauffante de l'élément chauffant (122) ; une puissance de chauffage, nécessaire au réglage d'une température prédéterminée de l'élément chauffant (122), d'une résistance chauffante de l'élément chauffant (122) ; une différence de température entre les températures détectées par les capteurs de température (124).

2. Procédé selon la revendication précédente, une modification de l'état de l'élément de détection (116) influant sur la première grandeur de mesure (156) et la deuxième grandeur de mesure de différentes manières.

3. Procédé selon la revendication précédente, l'état de l'élément détection (116) étant apprécié dans le procédé en particulier par génération d'au moins une information concernant l'état.

4. Procédé selon l'une des revendications précédentes, la correction étant formée par au moins une comparaison entre la première grandeur de mesure (156) et la deuxième grandeur de mesure (156).

5. Procédé selon l'une des revendications précédentes, la première grandeur de mesure (156) et la deuxième grandeur de mesure étant chacune prises en compte, lors de la détermination de la caractéristique d'écoulement, avec des pondérations différentes, en particulier dans la correction.

6. Procédé selon l'une des revendications précédentes, au moins un facteur de correction étant déterminé à partir de la première grandeur de mesure (156) et de la deuxième grandeur de mesure, la caractéristique d'écoulement étant déterminée au moyen d'au moins une relation prédéterminée à partir de l'une des grandeurs de mesure comme caractéristique d'écoulement non corrigée, la caractéristique d'écoulement non corrigée étant multipliée par le facteur de correction.

7. Procédé selon l'une des revendications précédentes, la caractéristique d'écoulement étant déterminée au moyen d'au moins une relation prédéterminée à partir de l'une des grandeurs de mesure comme caractéristique d'écoulement non corrigée, la caractéristique d'écoulement non corrigée étant multipliée par au moins une valeur d'une fonction de correction (158), la valeur de fonction dépendant de la caractéristique d'écoulement.

8. Procédé selon la revendication précédente, la caractéristique d'écoulement non corrigée étant prise pour sélectionner la valeur de la fonction de correction (158).

9. Dispositif (112) de détection d'au moins une caractéristique d'écoulement d'un milieu fluide en écoulement (120), le dispositif (112) comportant au moins un élément de détection (116), l'élément de détection (116) comprenant au moins un élément chauffant (122) et au moins deux capteurs de température (124), le dispositif (112) comprenant en outre au moins une commande (126), la commande (126) étant adaptée pour mettre en œuvre un procédé selon l'une des revendications précédentes.
